(19)

Europäisches
Patentamt
European
Patent Office
Office européen
des brevets

(11)  **EP 2 878 968 A1**

(12)  **EUROPEAN PATENT APPLICATION**

(43) Date of publication:
**03.06.2015 Bulletin 2015/23**

(51) Int Cl.:
***G01S 5/02*** (2010.01)

(21) Application number: **13382476.3**

(22) Date of filing: **27.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Telefonica Digital España, S.L.U.
28013 Madrid (ES)**

(72) Inventors:
• **Urriela Planas, Andrés-Avelino
08019 Barcelona (ES)**
• **Eecalada Sardina, José, Gregorio
08019 Barcelona (ES)**

(74) Representative: **Carpintero Lopez, Francisco et al
Herrero & Asociados, S.L.
Alcalá 35
28014 Madrid (ES)**

(54)  **Method for estimating speed of user devices in wireless communication networks**

(57)      A method of user speed estimation in a mobile network (200), comprising: collecting (210) all events from the network (200) during a time period,
grouping (21) all the network events associated with the same user and sorting them by their timestamps,
obtaining data of location and coverage area of the cell associated with each event (210),
computing a trajectory that minimizes speed for all events by estimating initial locations (22) of the user, per event, using a spatial model (23) based on the obtained data of location (220) and coverage of all the cells associated with the grouped network events,
updating the estimated positions to compute a path (24) that minimizes speed at every time, via an iterative process where positions are recomputed while the change in the estimated position exceeds a threshold (25),
estimating (26) a lower bound speed of the user, per event, by computing a function of the updated estimated locations and the timestamps of each event.

FIG. 2

EP 2 878 968 A1

**Description**

**Field of the invention**

The present invention has its application within the telecommunication sector, especially, relates to cellular radio systems, independently of the cellular technology, (CDMA, WCDMA or TDMA) and, in particular, to estimation of speed of mobile devices in wireless communication systems such as 2G, 3G and beyond 3G mobile networks.

**Background of the invention**

The growth of the mobile phone communication system in conjunction with the new technologies to process and extract information from Big Data sources has opened the possibility of new range of applications and services. The mobile network has millions of users that generate events daily, from tens of CDR (Call Data Record) to hundreds of network events per user. These events, once anonymized, can be used to extract information about transport systems, population distribution along all day, emergencies...
Mobile network events offer just samples of the antennae the user is connected at some timestamps, but in many applications (transport systems, traffic information, retailer information systems...) an estimation of her position, velocity and state is needed.
The technology of estimating position and velocity from radio or cellular signals is a very active field, because of its impact in industry and society. In the field of traffic information systems (TIS), lot of literature can be found about position and velocity estimation.
Many solutions are proposed based in analysing parameters of the signal received in the mobile device (or in the base antenna), and/or comparing and triangulating signals from different stations.
The Global Positioning System (GPS) has been widely used for tracking and speed estimation across a wide range of applications (e.g., the Mobile Millenium is a traffic information system based in GPS applications installed in volunteers' smartphones).
However, there are many situations in which GPS cannot be used due to cost, accuracy, and reliability and availability of GPS signals (and when smartphones are available, the battery drainage problem). And, in any case, it is not an easy task to get a significant proportion of the population into the project.
An alternative solution is to deploy a local positioning system consisting of an infrastructure of anchor nodes at known locations and mobile nodes attached to the objects to track. The location of the mobile nodes can be determined in two or three dimensions through an exchange of radio signals between the mobile nodes and the anchor nodes. A problem with local positioning systems, particularly in environments with constraints on signal propagation, is that the required anchor node density for full site coverage is not practical.
Mobile networks can use simple location techniques based on the events generated by mobile terminals. For example, cell-of-origin (COO) technique considers the unique identifiers of base stations used by mobile network to get an estimate of the current position. Information associated to a cell can include in practice the center of a sector, the azimuth angle, the angular width and a radius representing an expected size of the coverage area in which the mobile device is expected to be. For getting an acceptable accuracy, most of solutions work with some signal parameters like Timing Advance (TA), Round Trip Time (RTT) and Received Signal Strength (RSS), and triangulating with distance (like the GPS) or angle, with parameters like Angle of Arrival (AoA), Time of Arrival (TOA) or Time-Difference-of-Arrival (TDOA). In most of these solutions, the use of extended Kalman filters (EKF) is a natural choice.
Another example is described in US6052598, which presents a solution to predict the user location by measuring the received power in the mobile device. This solution handles instantaneous signal strength measurements between the mobile device and the base stations of the cell in which it is located and its neighbouring cells.
Nevertheless, in the case of using network events, instead of mobile events, there is no possibility of working with the signals, since the only information available is the identifier of the antenna. Although this restriction has the advantage that there is no need of extra deploying (neither in the network infrastructure nor in the user terminal), it makes impossible to use any of the existing solutions for estimating velocity.
Moreover, relying on the identifier of the cell given by the network events may be not accurate enough to get a good estimation of position and velocity. For example, the method for finding routes in urban environments described in "Route Choice Estimation Based on Cellular Signaling Data" by Tettamanti, Acta Polytechnica Hungarica, 2012, depends on a data source (antenna identifier from network events) and very dense spatial (urban environment, with lots of small antennae) and temporal (one event with each change of cell identifier) sampling rates.
There are also solutions trying to estimate some information related to the status, like the speed. For example, US2012/0309411 is oriented to a system running in the mobile device, deciding state continuously in real time. It not only uses network events generated by the device, but information from other sources, such as Wi-Fi or GPS to improve a track position, speed and other state information. This approach shows a method to estimate this state using an extended Kalman Filter (EKF) using a set of observations from different sensors (GNSS, Wi-Fi, cell-id in handover events). Then, a motion context is determined for the mobile devices by determining whether the mobile device is moving and the type of movement. Several dynamic model parameters are determined based on the determined motion context. A state indicating a position or velocity of the mobile devices is determined based on the selected observation type and determined dynamic model parameters. This approach and other EKF-based perform poorly when applied to scenarios where only network-events are available. Furthermore, the method does not calculate the position or velocity of the device, but directly uses the standard information provided by the networks (e.g. Wi-Fi, GPS, cell network, etc.); and therefore, no need to deal with special considerations about the network, such a coverage areas or spatio-temporal event relations.

Other publications show a variety of techniques to dynamically combine multiple inputs to track device position, speed and other state information. The implementations combine multiple input observations received from a variety of sources (e.g., Wi-Fi, cell, GPS) where the position is basically obtained from the source.

For example, WO2010/090558 shows a method to compute traffic state (congestion) based on the monitoring of some hand-over events over a multitude of mobile devices. The system collects locations of cell switching points where handover takes place between successive cells of network when mobile terminals travels along selected known route to determine is the route is congested or not. This method is focused on identifying traffic congestion using or tracking movements of a plurality of mobile terminal. Mobile tracking is done only with network events related with the handover (cell transition events) and does not preclude the use of GPS or other positioning systems. This technique does not allow computing the speed for all devices, but only those generating handover-events (active calls). Therefore, it does not solve the problem of estimating the speed of the devices only with network events (any type), including cases that does not involve vehicles.

The main problem with most of the found solutions is the restriction of having existing ULERs (Unified Location Event Record), events that are already produced and managed by the network, as input, since the solution is restricted to the limited information that the ULERs can carry now. Each network-event, defined by an ULER and collected from a mobile network, comes with the following information: a unique identifier of the mobile device or user equipment (user-id) like MSISDN, an identifier of the cell that covers the event (cell-id), and the time instant at which this event was generated. ULERs can be obtained from the CDRs (Call Detailed Records) or using probes installed at some nodes in the mobile network.

As already presented, most of the solutions rely on measures of the signal parameters (usually signals with several antennae) and/or special applications in the mobile device, in order to achieve the desired accuracy. In the context of the proposed solution, these inputs are not available from the ULERs.

Summarizing, network events, consisting basically of a set of three values (anonymized user identifier, antenna identifier, and timestamp) are not explicit enough to explode all their possibilities. They must be enriched with additional information (antennae coverage, demographic and socio-economic information and any other context dependent dataset) and processed to create new relationships among the data.

Therefore, there is a need in the state of the art for a method to provide improved estimation speed of a wireless device based on the network events, processing all those network events in order to offer additional information to Big Data applications.

## Summary of the invention

The present invention solves the aforementioned problems and overcomes previously explained state-of-art work limitations by disclosing a method which enables speed estimation of a mobile user device (e.g., a GSM mobile station -MS- or 3G/4G user equipment -UE-) with the only input of network events generated by the wireless (mobile) device, using information on location and coverage area of the cells where those events are generated.

The present invention allows the computation of the trajectory and then the estimation of the speed for all the mobile devices in the wireless network, including those generating handover-events (active calls). Thus, a possible application of this invention may be to locate the exact point where a handover occurs, always taking into account the routes (e.g. street maps) from which tracking is calculated.

In an embodiment of the invention, the proposed mobile user speed estimator comprises a transient module in charge of identifying network events (ULERs: Unified Location Event Records) associated with any transportation system, in order to determine when the users are static or walking and where they are moving using any transportation (car, bus, plane, etc.). For this purpose, all ULER belonging to the same user during a period of time (e.g. a day) are processed together to estimate the path (trajectory) that minimizes speed. With this lower bound for the speed, transient ULERs can be identified as those with an estimated speed higher than a threshold.

In the context of this invention, a trajectory is a collection of position-estimated points, one for each network-event associated with a user.

According to a first aspect of the present invention, a method for estimating speed of mobile devices in cellular networks is disclosed and comprises the following steps:

- grouping all the network events associated with a same user (i.e., having the same identifier of user device) and sorting each network event by its associated timestamp,
- obtaining data of location and coverage area of the cell associated with each network event,
- computing a trajectory that minimizes speed for all grouped network events by estimating positions of the user device for each network event based on the obtained data of location and coverage area of all the cells associated with all the grouped network events,
- updating the estimated positions to compute a path that minimizes speed at every time instant,
- providing an estimation of a lower bound speed of the user device, for each grouped network event, by computing a function of the updated estimated locations and the timestamps associated with each grouped network event.

The proposed estimation of user speed in the mobile network starts from the collection of all network events reported by the mobile network during a time period, which is configurable by the mobile network operator. Multiple, at least three, network events are used, which are generated by a user device. Each network event is associated with a timestamp indicating a time instant at which the event is generated, with an identifier of the user device and an identifier of a cell covering the user device at the timestamp. The network events to be considered for the speed estimation are consecutive in time.

In a second aspect of the present invention, a computer program is disclosed, comprising computer program code means adapted to perform the steps of the described method, when said program is run on a computer, a digital signal processor, a field-programmable gate array, an application-specific integrated circuit, a micro-processor, a micro-controller, or any other form of programmable hardware.

The method in accordance with the above described aspects of the invention has a number of advantages with respect to prior art, which can be summarized as follows:

- The present invention can be applied offline to all network-users in a completely passive way: nor additional infrastructure in the mobile network nor active hardware nor software is required in the mobile terminal, and battery drainage is avoided.
- There is no need for GPS data or any other type of LBS (Location Based System).
- The lost in the intrinsic accuracy of the input data (cell identifier) is compensated by working in batch with all the events available for the user, along the whole day. This large scope allows the solution to optimize globally and to exploit correlations between data.
- The proposed solution needs a cell coverage model, but this model allows also integrating more restrictions to the finding of the optimum path, so it is possible to integrate landuse information, or even routes information.

These and other advantages will be apparent in the light of the detailed description of the invention.

**Description of the drawings**

For the purpose of aiding the understanding of the characteristics of the invention, according to a preferred practical embodiment thereof and in order to complement this description, the following figures are attached as an integral part thereof, having an illustrative and non-limiting character:

Figure 1 shows flow chart of a method for estimating speed of mobile user devices based on network events, according to a preferred embodiment of the invention.
Figure 2 shows a block diagram of the data and network entities used in a system for estimating speed of mobile user devices based on network events in a cellular network, according to a possible embodiment of the invention.
Figure 3 shows a schematic diagram of a network scenario having two network events for estimating speed of a mobile device, in accordance with a possible application case of the invention.
Figure 4 shows a schematic diagram of a network scenario having three network events for estimating speed of a mobile device, in accordance with another possible application case of the invention.
Figure 5 shows a schematic diagram of a network scenario having two time intervals of network events for estimating speed of a mobile device, in accordance with a further possible application case of the invention.
Figure 6 shows a schematic diagram of Azimuth and Beam Width parameters, as known in prior art.
Figure 7 shows a schematic diagram of corrections for estimating speed of mobile devices in sectored cells, according to another possible embodiment of the invention.

**Preferred embodiment of the invention**

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

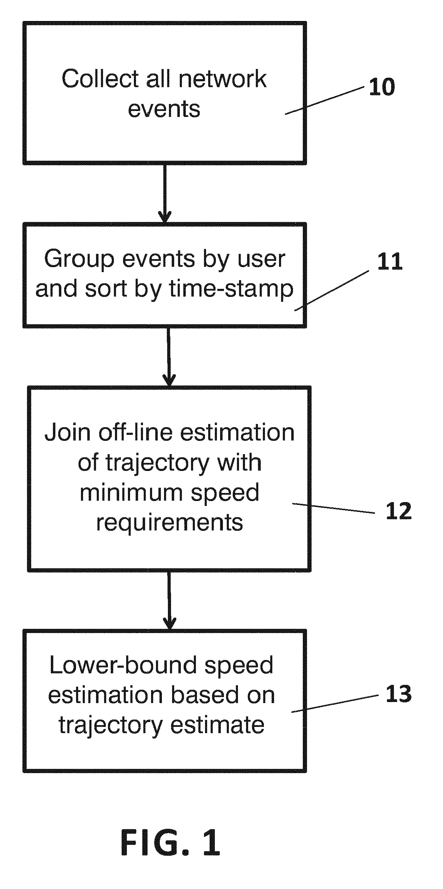

It is within this context, that various embodiments of the invention are now presented with reference to the FIGs. 1-7.

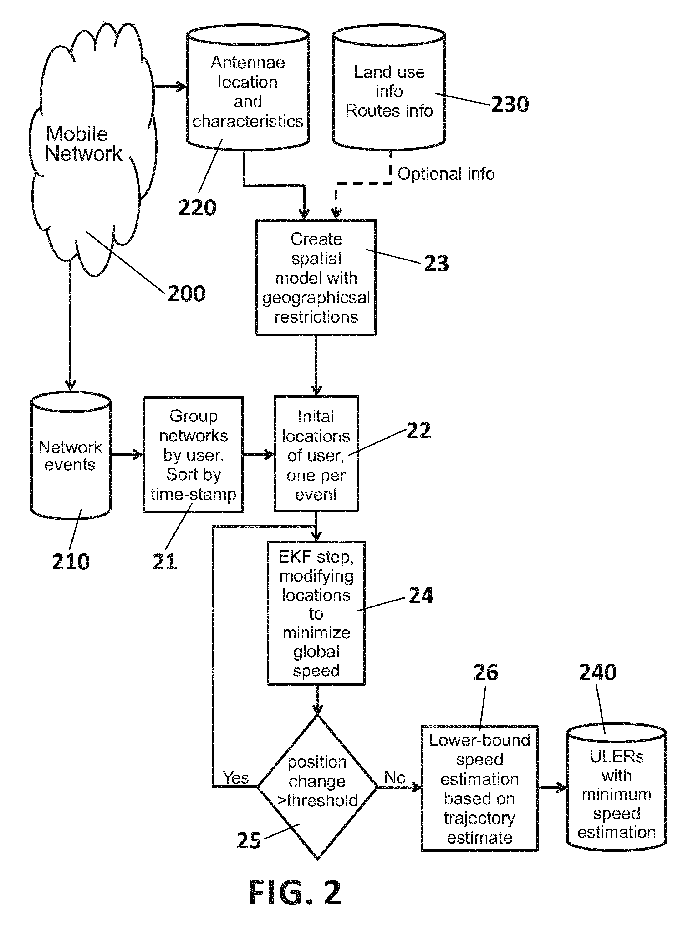

Figure 1 presents a general schema of the main steps for estimating speed of mobile user devices according to the proposed method in a mobile network (200), which is illustrated in the block diagram of Figure 2. These basic steps are the following ones:

- Collecting (10, 210) all network events generated by all users of the mobile network (200) during a time-interval, e.g., a day. Network events (ULERs) can be obtained, for example, from CDRs or probing nodes of the mobile network (200).
- Grouping (11, 21) all these network events by user or mobile device, so that all network events associated with a particular user can be processed at once, simultaneously. In addition, every network event is sorted by a timestamp.
- Computing a trajectory (12) that minimizes speed satisfying all network events, i.e., the estimation of the trajectory is joined off-line with the requirements of minimum speed of the user. This estimation is done for each user and using all available network-events of said user. The trajectory of a user is computed/estimated by determining the initial locations (22) of this user, per event, using a spatial model (23) that is generated with geographical restrictions defined by the location and characteristics of the antennae (220) covering the cell where the user is located. Optionally, in addition, additional data related to routes and land-use information (230) under the coverage of the cell can be used to create the spatial model (23) with restrictions the possible movements of the user device.

- Computing a path (24) that minimizes speed at all instants of time, by modifying the previously estimated positions of the user. This step can be performed using a Extended Kalman Filter. This is an iterative process where all estimated positions are recomputed or updated, while the change in the position exceeds a pre-defined threshold (25); when the change is too small, i.e., it equals the threshold or a lower value, the updating process stops. The comparison with the threshold in the estimation of positions, and so, speed, identifies transients users. In each iteration, the positions are computed to jointly minimize speed along the entire trajectory, i.e., the global speed.
- After the updating iterative process, once an estimated position of the user and for each network event has been obtained, computing or estimating (13, 26) a lower bound of an input speed and output speed of the user, for each network-event, by taking the distance between the estimated position and the different position that the user had in the event time, i.e., the time instant defined by the time-stamp associated with the network-event. Input speed is computed against the previous network-event (if any) and Output speed is computed against the next network-event (if any), the network-events being ordered or sorted by time-stamps, as described before. For each network-event and based on the previous estimation of the trajectory, the final lower-bound speed is estimated (13, 26) as the minimum of input and output speeds, and network-events or ULERs with the minimum speed are identified (240).

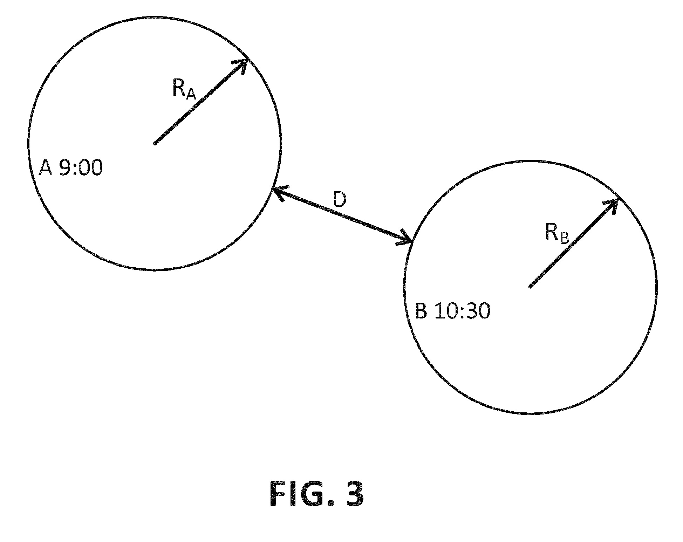

Some exemplary network scenarios and application cases are described below and shown in Figures 3-7.

In a possible network scenario, shown in Figure 3, it is assumed that there are only two ULERs for a user that is

    i. under the coverage of a cell (A) at time instant 9:00, associated with a first ULER;
    ii. under the coverage of another cell (B) at 10:30, time-stamp associated with a second ULER.

The trajectory followed by this user between these two event time-stamps, 9:00 and 10:30, cannot be estimated but the speed estimator can take into account that the average speed of the user is lower bounded by the expression:

$$\hat{s} = D/\Delta T$$

where D is the minimum distance between both cells (A, B) and $\Delta T$ is the difference in time between both time-stamps, associated with the two ULERs.

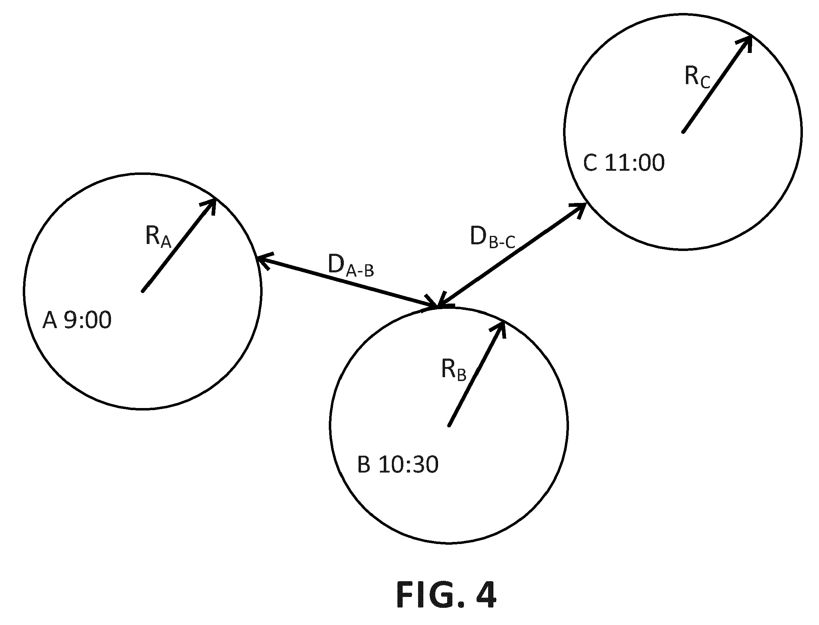

In a possible embodiment of the proposed method for estimating speed, there are three ULERS as depicted in Figure 4:

i. the user is under the coverage of a cell (A) at time instant $T_A$ = 9:00, associated with a first ULER;
ii. the user is under the coverage of another cell (B) at $T_B$ = 10:30, time-stamp associated with a second ULER; and
iii. the user is under the coverage of a further cell (C) at $T_C$ = 11:00, time-stamp associated with a third ULER.

In this case, it is possible to find the distance between cells A and B, $D_{A-B}$, and cells B and C $D_{B-C}$, which minimize the lower-bound of the user speed defined respectively for each one of the two time-intervals, $T_{A-B}$ = $T_B$ -$T_A$ and $T_{B-C}$ = $T_C$ -$T_B$. Concretely, the speed estimation for both time intervals, $\hat{s}_{A-B}$ = $D_{A-B}/\Delta T_{A-B}$ and $\hat{s}_{B-C}$ = $D_{B-C}/\Delta T_{B-C}$ respectively, is computed as follows:

$$\hat{S}_{A-B} = D_{A-B}/\Delta T_{A-B}$$

$$\hat{S}_{B-C} = D_{B-C}/\Delta T_{B-C}$$

In this simple scenario, taking into account that both time-intervals are 30 minutes, both segments $D_{A-B}$, and $D_{B-C}$ should be equal to guarantee a minimum common speed.

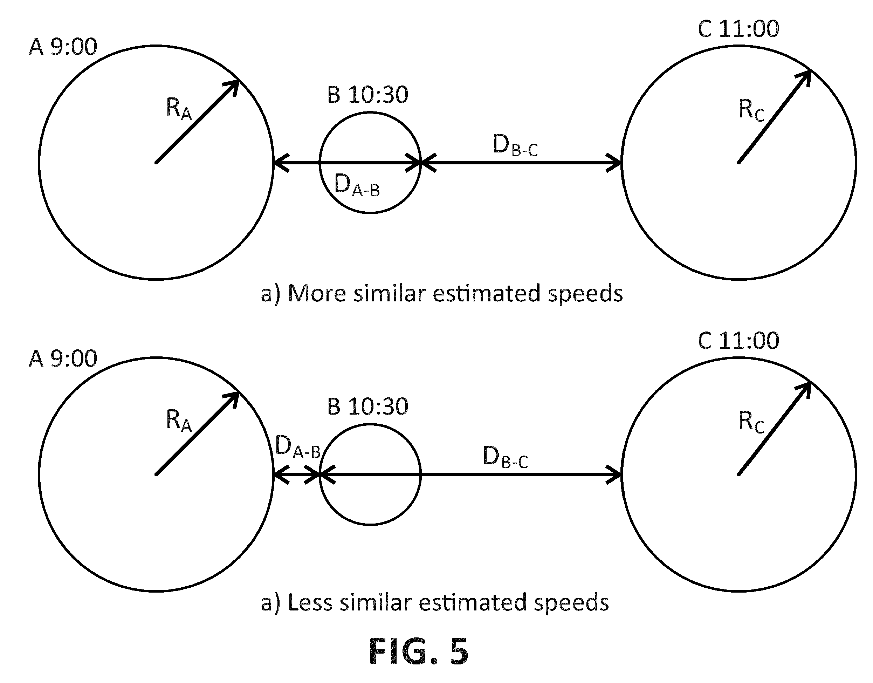

However, in some cases, it is not possible to guarantee a common estimated speed along the trajectory. In those cases, it is important to estimate the lowest possible speed. Figure 5 shows a scenario with two time-intervals where it is not possible to define a common minimum-speed and satisfy all ULERs at the same time. In this scenario, it is clear that both segments $D_{A-B}$, and $D_{B-C}$ cannot have the same length, because they are restricted by the coverage area of the associate cells. Therefore, both time-intervals $T_{A-B}$ and $T_{B-C}$ cannot have the same estimated speed. In this case, there are multiple possible trajectories with different estimated speeds for both trajectories. In Figure 5, two limit cases are shown:

(a) in the upper diagram, the most similar estimated speeds are obtained; the estimated position under the coverage of cell B is iterated such that the combined speeds of both sectors ($D_{A-B}/T_{A-B}$ and $D_{B-C}/T_{B-C}$) are minimized;
(b) while in the lower diagram, the algorithm iterates to locate the user in a position such that an absolute minimum speed ($D_{A-B}/T_{A-B}$, in this case) is obtained. In this case, less similar estimated speeds result. Logically, the first case is preferred, since it guarantees the minimum "common" speed estimator for the trajectory.

Generalizing to a number N≥3 of network events or ULERs and assuming that there are only omnidirectional antennae, the scenario for a particular user with a set of N ULERs is defined as follows:

$C_i$ is the Cartesian coordinates of the antenna associated with the i-th ULER
$r_i$ is the radius of the antenna associated with the i-th ULER
$t_i$ is the time-stamp in seconds of the i-th ULER
i = 3, 4, 5,... is the network event number, associated with a cell identifier and a user identifier, and ordered by time-instant that stamps the network event (ULER).

The output of the proposed estimator is defined as follows:

$\hat{x}_i$ is the estimated position of the user at the same instance of time as the i-th ULER Once the positions $\hat{x}_i$ $\forall i$ are estimated for all the network-events, input speed $\hat{s}_i^{IN} = \frac{\|\hat{x}_i - \hat{x}_{i-1}\|}{t_i - t_{i-1}}$ and output speed $\hat{s}_i^{OUT} = \frac{\|\hat{x}_i - \hat{x}_{i+1}\|}{t_{i+1} - t_i}$ for each network-event (ULER) is estimated as follows, for the i-th ULER $\hat{x}_i$ $\forall i$:

$$\hat{s}_i^{IN} = \frac{\|\hat{x}_i - \hat{x}_{i-1}\|}{t_i - t_{i-1}}$$

$$\hat{s}_i^{OUT} = \frac{\|\hat{x}_{i+1} - \hat{x}_i\|}{t_{i+1} - t_i}$$

For each network event, the final speed estimation $\hat{s}_i$ is computed as the minimum of these estimated input and output speeds, for the i-th ULER $\hat{x}_i$ $\forall i$:

$$\hat{s}_i = \min\left(\hat{s}_i^{IN}, \hat{s}_i^{OUT}\right)$$

As the goal is to find all the positions $\hat{x}_i$ $\forall i$ that minimize the estimated speeds, an iterative process is applied, where each position estimation $\hat{x}_i$ is updated based on previous and next estimated positions ($\hat{x}_{i-1}$, $\hat{x}_{i+1}$) corresponding respectively to the previous i-1 ULER and next i+1 ULER.

In an equilibrium scenario and if there is no limitation by the size of the cell $r_i$, it can be written that:

$$\frac{\|\hat{x}_{i-1} - \hat{x}_i\|}{t_i - t_{i-1}} = \frac{\|\hat{x}_{i+1} - \hat{x}_i\|}{t_{i+1} - t_i}$$

Hence, in order to reach this equilibrium state, each position estimation is updated by computing the following Equation 1:

$$\hat{x}_i' = \hat{x}_i + \gamma\left[\alpha(\hat{x}_{i+1} - \hat{x}_i) + \beta(\hat{x}_{i-1} - \hat{x}_i)\right]$$

where $\hat{x}_i'$ is the new/updated estimated position, $\gamma$ is a general progression factor and coefficients $\alpha$ and $\beta$ are defined as follows:

$$\alpha = \frac{t_i - t_{i-1}}{(t_i - t_{i-1}) + (t_{i+1} - t_i)}$$

$$\beta = 1 - \alpha = \frac{t_{i+1} - t_i}{(t_i - t_{i-1}) + (t_{i+1} - t_i)}$$

It can be shown that, if consecutive (in event time) positions $\hat{x}_{i-1}$, $\hat{x}_i$, $\hat{x}_{i+1}$ are placed on a straight line, this iterative method reaches equilibrium. Indeed, if at least three points can be moved freely, the minimum common speed is reached when they are aligned in a line.

If the size and shape of the cell does not allow placing the three estimated positions on the same line, this solution finds the trajectory that minimizes the common speed. The progression factor $\gamma$ controls the "flexibility" of the proposed method to find a stable estimated position, such that progression factors close to 0 result in a very slow evolution in the model, while progression factors close to 1 may result in an oscillating solution (even unstable).

Once each position is updated using the previous Equation 1, it is necessary to correct the recomputed estimations if the updated positions are outside the coverage of the associated cell. That is, if $\hat{x}_i$ does not fall inside the coverage of cell "i", it must be moved to the closest point inside the coverage area. If working with omnidirectional antennae, then, this correction is performed by calculating the following Equation 2:

$$\text{If } \|\hat{x}_i' - c_i\| > r_i \quad \rightarrow \quad \hat{x}_i'' = c_i + r_i\, u_{c_i \rightarrow \hat{x}_i'}$$

$$\text{If } \left\| \hat{x}_i{}' - c_i \right\| \leq r_i \quad \rightarrow \quad \hat{x}_i{}'' = \hat{x}_i{}'$$

where $\hat{x}_i{}''$ is the new/corrected estimated position and $u_{c_i \rightarrow \hat{x}_i{}'}$ is the unitary vector from the center of the cell to the current estimated position.

Therefore, the iterative implementation of the proposed method repeats the following steps of position estimations at each iteration:

a) The estimated position $\hat{x}_i$ $\forall i$ is recomputed for each ULER i using Equation 1 based on previous and next ULERs, i-1 and i+1, in order to generate an updated estimated position $\hat{x}_i{}'$.
b) Only if this updated position $\hat{x}_i{}'$ falls outside the coverage area of the cell i, a step of correction is additionally carried out by using Equation 2, which is applied to generate a corrected estimated position $\hat{x}_i{}''$.

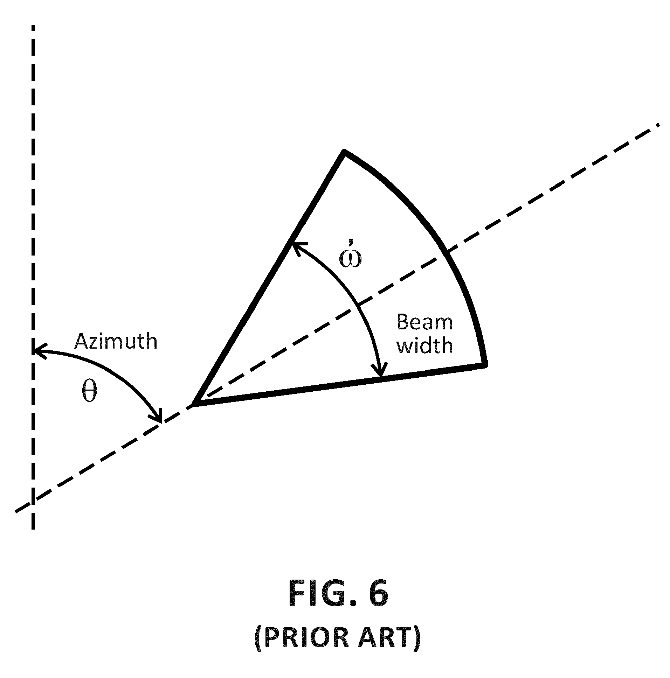

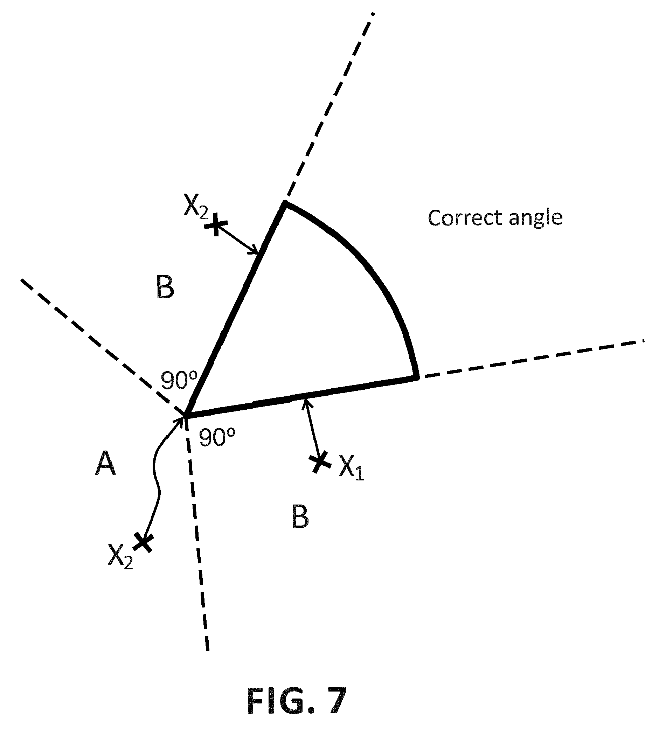

In another possible embodiment of the proposed method, the application case is extended to non-omnidirectional antennae. If the network scenario handles sectored cells, as shown in Figure 7, i.e., cells with azimuth and a particular beam-width, there is no important difference, the only correction done by equation 2 is to put the position estimation back into the coverage of the cell that has to be modified. In this case, the following parameters define the coverage area of the cell, as shown in Figure 6:

$\theta$ azimuth, is the angle which the coverage area of the cell is pointing to,
$\omega$ beam-width is the width in radians of the cell coverage,
$C_i$ is the Cartesian coordinates of the antenna associated with the i-th ULER,
$r_i$ is the radius of the antenna associated with the i-th ULER.

As depicted in Figure 7, for an antenna coverage modeled with an azimuth $\theta$ and a beam width angle $\omega$, as shown in Figure 6, if the updated estimated position $\hat{x}_i{}'$ lies outside the coverage area, it is brought back up the antenna coverage following the perpendicular to the closest side of the sector.
Under the above-mentioned cell definition, the correction by Equation 2 is done in two steps:

a) Correction of the relative-angle with respect to the center of the cell
b) Correction of the relative-radius with respect to the center of the cell The second correction is exactly the same as described in Equation 2. The first correction is done depending on how large the error in terms of angle is. Figure 7 shows areas where a different correction is applied:

For all points falling in an area "B" of the sectored cell, a correction moving perpendicular to the limits of the cell definition is done. For instance points x1 and x2 are corrected moving perpendicular to the closest limit of the cell.
By contrast, all points falling in area "A" of the sectored cell are corrected automatically to the center of the antenna, since it is the closest point inside the coverage area.

Note that both areas "A" and "B" are delimited by two lines which are perpendicular to each lateral limits of the coverage area, e.g., 90 ° shown in Figure 7.
Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1. A method for estimating speed of user devices in a mobile network (200), wherein at least three network events, consecutive in time, are generated by a user device, each network event associated with a timestamp indicating a time instant at which the event is generated, with an identifier of the user device and an identifier of a cell covering the user device at the timestamp, the method comprising:

- collecting (10, 210) all network events from the mobile network (200) during a time period configurable by the mobile network (200) operator,

and being **characterized by** further comprising:

- grouping (11, 21) all the network events associated with the same identifier of user device and sorting every network event by the associated timestamp,
- obtaining data of location and coverage area of the cell associated with each network event (210),
- computing a trajectory (12) that minimizes speed for all grouped network events by estimating positions of the user device for each network event based on the obtained data of location and coverage area of all the cells associated with all the grouped network events,
- updating the estimated positions to compute a path (24) that minimizes speed at every time instant,
- estimating (13, 26) a lower bound speed of the user device, for each grouped network event, by computing a function of the updated estimated locations and the timestamps associated with each grouped network event.

2. The method according to claim 1, wherein the step of updating the estimated positions is iteratively repeated and comprises comparing, at each iteration, the updated position with a threshold (25) to determine whether the updating is repeated in a next iteration.

3. The method according to any preceding claim, wherein each network event is defined by a Unified Location Event Record.

4. The method according to any preceding claim, wherein computing the trajectory (12) further comprises using additional data of routes and land-use of the location and coverage area of all the cells.

5. The method according to any preceding claim, wherein the step of estimating (13, 26) the lower bound speed of the user device comprises, for each network event, being at least three network events and sorted in time by time-stamps:

- If there is a network event previous in time, computing an Input speed $\hat{s}_i^{IN} = \frac{\|\hat{x}_i - \hat{x}_{i-1}\|}{t_i - t_{i-1}}$ of the user device based on the current network event and the previous network event,

- If there is a network event subsequent in time, computing an output speed $\hat{s}_i^{OUT} = \frac{\|\hat{x}_{i+1} - \hat{x}_i\|}{t_{i+1} - t_i}$ of the user device based on the current network event and the subsequent network event,
- computing the lower-bound speed $\hat{s}_i$: as the minimum of the input speed and output speed:

$$\hat{s}_i = \min\left(\hat{s}_i^{IN}, \hat{s}_i^{OUT}\right)$$

6. The method according to claim 5, wherein the Input speed $\hat{s}_i^{IN} = \frac{\|\hat{x}_i - \hat{x}_{i-1}\|}{t_i - t_{i-1}}$ of the user device for an i-th network event, based on the current i-th network event and the previous (i-1)-th network event, is computed as:

$$\hat{s}_i^{IN} = \frac{\|\hat{x}_i - \hat{x}_{i-1}\|}{t_i - t_{i-1}}$$

where $t_i$ is the timestamp associated with the i-th network event and
$\hat{x}_i$ is the estimated position of the user device at the same instance of time as the i-th network event.

7. The method according to any of claims 5-6, wherein the output speed $\hat{s}_i^{OUT} = \frac{\|\hat{x}_{i+1} - \hat{x}_i\|}{t_{i+1} - t_i}$ of the user device for an i-th network event, based on the current i-th network event and the subsequent (i+1)-th network event, is computed as:

$$\hat{s}_i^{OUT} = \frac{\|\hat{x}_{i+1} - \hat{x}_i\|}{t_{i+1} - t_i}$$

where $t_i$ is the timestamp associated with the i-th network event and
$\hat{x}_i$ is the estimated position of the user device at the same instance of time as the i-th network event.

8. The method according to any preceding claim, wherein the step of updating the estimated positions $\hat{x}_i$ comprises computing updated estimated positions $\hat{x}_i'$ for every i-th network event as:

$$\hat{x}_i' = \hat{x}_i + \gamma [\alpha(\hat{x}_{i+1} - \hat{x}_i) + \beta(\hat{x}_{i-1} - \hat{x}_i)]$$

where $\gamma \in [0,1]$ is a progression factor indicating stability of the estimated positions $\hat{x}_i$, and $\alpha$ and $\beta$ are coefficients defined as follows:

$$\alpha = \frac{t_i - t_{i-1}}{(t_i - t_{i-1}) + (t_{i+1} - t_i)}$$

$$\beta = 1 - \alpha = \frac{t_{i+1} - t_i}{(t_i - t_{i-1}) + (t_{i+1} - t_i)}$$

where $t_i$ is the timestamp associated with the i-th network event.

9. The method according to claim 8, further comprising correcting the updated estimated positions $\hat{x}_i'$ for every i-th network event, by calculating the following equation:

$$\text{If } \|\hat{x}_i' - c_i\| > r_i \quad \rightarrow \quad \hat{x}_i'' = c_i + r_i u_{c_i \rightarrow \hat{x}_i'}$$

$$\text{If } \|\hat{x}_i' - c_i\| \leq r_i \quad \rightarrow \quad \hat{x}_i'' = \hat{x}_i'$$

where $\hat{x}_i''$ is a corrected estimated position,
$C_i$ denotes Cartesian coordinates of an antenna covering the cell whose identifier is associated with the i-th network event, and $r_i$ is the radius of the antenna,
and $u_{c_i \rightarrow \hat{x}_i'}$ is a unitary vector from the center of the cell, whose identifier is associated with the i-th network event, to the updated estimated position $\hat{x}_i'$.

10. The method according to claim 9, wherein the step of correcting the updated estimated positions $\hat{x}_i'$ is performed for the i-the network event only if the updated estimated position $\hat{x}_i'$ is outside the coverage area of the cell, whose identifier is associated with the i-th network event.

11. The method according to any of claims 8-9, wherein the step of correcting the updated estimated position $\hat{x}_i'$ for every i-th network event, comprises a correction in radius of the updated estimated positions $\hat{x}_i'$ with respect to the center of the cell, whose identifier is associated with the i-th network event, if there is an omnidirectional coverage by the cell.

12. The method according to any of claims 8-9, wherein the step of correcting the updated estimated position $\hat{x}_i'$ for every i-th network event, comprises a correction in both radius and angle of the updated estimated positions $\hat{x}_i'$ with respect to the center of the cell, whose identifier is associated with the i-th network event, if there the cell is sectored.

13. A computer program product comprising program code means which, when loaded into processing means of a network entity in a cellular communications network, make said program code means execute the method according to any of claims 1-12.

Collect all network events — 10

Group events by user and sort by time-stamp — 11

Join off-line estimation of trajectory with minimum speed requirements — 12

Lower-bound speed estimation based on trajectory estimate — 13

# FIG. 1

**FIG. 2**

**FIG. 3**

**FIG. 4**

a) More similar estimated speeds

a) Less similar estimated speeds

# FIG. 5

**FIG. 6**
**(PRIOR ART)**

**FIG. 7**

Europäisches
Patentamt
European
Patent Office
Office européen
des brevets

**EUROPEAN SEARCH REPORT**

Application Number

EP 13 38 2476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/281712 A1 (POVEY GORDON [GB] ET AL) 6 December 2007 (2007-12-06) * paragraphs [0146] - [0157]; figures 1,2,3, 5,6,18,19 * | 1-13 | INV. G01S5/02 |
| A | US 2011/034178 A1 (MEHTA CHAND [US]) 10 February 2011 (2011-02-10) * the whole document * | 1-13 | |
| A | US 2009/005972 A1 (DE KONING WILHELMUS G [NL] DE KONING WILHELMUS [NL]) 1 January 2009 (2009-01-01) * the whole document * | 1-13 | |

TECHNICAL FIELDS
SEARCHED (IPC)

G01S

The present search report has been drawn up for all claims

| Place of search | Date of completion of the search | Examiner |
|---|---|---|
| Munich | 23 May 2014 | Kern, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 38 2476

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2014

| Patent document cited in search report | | Publication date | Patent family member(s) | | Publication date |
|---|---|---|---|---|---|
| US 2007281712 | A1 | 06-12-2007 | EP US WO | 1741311 A1 2007281712 A1 2005107309 A1 | 10-01-2007 06-12-2007 10-11-2005 |
| US 2011034178 | A1 | 10-02-2011 | US WO | 2011034178 A1 2011019569 A1 | 10-02-2011 17-02-2011 |
| US 2009005972 | A1 | 01-01-2009 | AT EP US WO | 528946 T 2172048 A2 2009005972 A1 2009004477 A2 | 15-10-2011 07-04-2010 01-01-2009 08-01-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6052598 A
- US 20120309411 A

- WO 2010090558 A